Europäisches Patentamt

European Patent Office

Office européen des brevets

(11) Publication number: **0 099 741**
**B1**

(12) **EUROPEAN PATENT SPECIFICATION**

(45) Date of publication of patent specification: **08.07.87**

(51) Int. Cl.⁴: **A 61 C 7/00**

(21) Application number: **83304134.6**

(22) Date of filing: **15.07.83**

(54) **Orthodontic attachments.**

(30) Priority: **21.07.82 CA 407694**

(43) Date of publication of application:
**01.02.84 Bulletin 84/05**

(45) Publication of the grant of the patent:
**08.07.87 Bulletin 87/28**

(84) Designated Contracting States:
**AT BE CH DE FR GB IT LI LU NL SE**

(56) References cited:
**US-A-4 050 156**
**US-A-4 068 379**
**US-A-4 100 678**

(73) Proprietor: **Smith, Dennis Clifford**
**183 St. Clair Avenue, East**
**Toronto Ontario (CA)**
(73) Proprietor: **Maijer, Rolf**
**435 Trunk Road**
**Duncan British Columbia (CA)**

(72) Inventor: **Smith, Dennis Clifford**
**183 St. Clair Avenue, East**
**Toronto Ontario (CA)**
Inventor: **Maijer, Rolf**
**435 Trunk Road**
**Duncan British Columbia (CA)**

(74) Representative: **Burford, Anthony Frederick**
**et al**
**W.H. Beck, Greener & Co. 7 Stone Buildings**
**Lincoln's Inn**
**London WC2A 3SZ (GB)**

EP 0 099 741 B1

Courier Press, Leamington Spa, England.

# 0 099 741

**Description**

The present invention relates to novel orthodontic and other dental attachments, such as, brackets, bases, bands, periodontal splints and oral-surgical splints.

In orthodontic surgical procedures, orthodontic brackets commonly are attached directly to teeth by adhesive bonding. The tooth surface often is acid etched, so that a micro-mechanical interlock is achieved between the resin and the etched surface. Alternatively, as described in our U.S. Patent No. 4,382,792 issued May 10, 1982, the surface of the tooth may be provided with a crystal growth to which the resin is bonded.

There is also a mechanical bond between the bracket base abutting the tooth and the resin. This mechanical bond represents the weak point of the assembly and brackets can become detached from the teeth by failure of the mechanical bond at the bracket/resin interface, if the shear strength thereof is exceeded. A variety of base designs have been proposed and utilized in an attempt to overcome this problem. Some examples include a stainless steel base with perforations, a stainless steel mesh base, a foil mesh base comprising a thin piece of stainless steel welded to a mesh backing, a metal base with machined retentive undercuts, plastic brackets and bases constructed of polycarbonate, and ceramic bases and brackets.

Although these bracket designs provide reasonably good bonding, there are a number of practical disadvantages associated with the designs. For example, perforated stainless steel bases may produce staining around the perforations at the adhesive level. In welded brackets, weld spots may obliterate the retentive areas in mesh bases, leading to decreased bond strength, and weld spots at the edges of the base may lead to leakage and corrison. Plastic bases are difficult to bond to with current resin bonding systems while ceramic bases are bulky and may show brittle characteristics.

It has been proposed in US 4050156 to improve the aesthetic appearance of metal dental appliances by coating them with a coating including a para-oxybenzoyl homopolyester, a polymeric fluorocarbon and a pigment for providing a tooth coloured appearance. The specified pigment is titanium dioxide. The coating materials can be applied in powder form. Temperatures above 315°C (600°F) are used to form the coating, resulting in a smooth coherent coating of uniform thickness. There is no disclosure of applying the coating to the tooth engaging surface of the appliance.

In accordance with the present invention, there is provided a novel structure of dental attachment which overcomes the problems of the prior art structures and has several advantages when compared with the prior art structures.

The present invention provides a dental attachment, including brackets, bases, bands, periodontal splints and oral surgical splints, which has on the tooth engaging surface thereof an adherent coating of particulate material providing a porous interface into which bonding resin in a fluid uncured state may readily flow and penetrate.

The provision of the particulate coating on the tooth engaging surface thereof enables improved bonding between the tooth and the dental attachment to be achieved, without the problems attendant the prior art structures.

The particulate coating may be formed on the tooth engaging surface of the attachment in any convenient manner, such as, by fusion or by sintering. The particles making up the coating may be any convenient shape, including a spherical shape or an irregular shape, and may be constructed of metal (including alloys), ceramic, polymer, or a mixture of materials.

The material of construction of the particles usually, but not necessarily, is the same as the material of construction of the substrate, in which case the particles usually are bonded to the substrate through their material of construction. An example of a structure according to the invention wherein dissimilar materials are used is a porous coating of ceramic material on a stainless steel or other metal substrate while an example of a structure according to the invention wherein similar materials are used is a porous coating of stainless steel on a stainless steel substrate.

The particulate coating adhered to the tooth engaging surface may take the form of discrete particles which are spaced apart from each other on the surface, or may take the form of a layer or multiple layers of particles bonded together to produce a network of interconnected pores.

The particulate coating used in this invention provides a porous interface into which a bonding resin in a fluid uncured state may readily flow and penetrate. Upon curing of the resin to solid form, mechanical interlock is achieved between the cured resin and the particulate coating.

Under some circumstances chemical bonding in addition to this mechanical bonding may be achieved, for example, by the use of polycarboxylate or glass ionomer cements with stainless steel and other metallic substrates and with ceramic substrates.

The thickness of the particulate coating on the tooth engaging surface of the dental attachment in this invention may vary widely depending on the size of the particles, the form of the coating and the number of layers desired in the coating, if in that form. The thickness of the particulate coating generally is up to about 500 micrometers, preferably about 50 to about 300 micrometers.

For a coating comprising discrete spaced apart particles, irregular particles or spherical particles of about 20 to about 100 micrometers in diameter with a spacing of about 20 to about 300 micrometers between them are preferred.

**0 099 741**

For a coating of integrally-joined particles which make up a porous structure having a plurality of interconnected pores extending therethrough, the particles are usually less than about 200 micrometers (about −100 mesh) and preferably a mixture of particles of varying particle sizes restricted to one of three size ranges, namely about 50 to about 200 micrometers (−100 +325 mesh), about 20 to about 50 micrometers (−325 +500 mesh) and less than about 20 micrometers (−500 mesh).

The size of the particles in the porous structure determines the pore size of the pores between the particles. Smaller-sized pores are preferred for low viscosity fluid resin bonding agents whereas larger-sized pores are preferred for more viscous cementitious bonding materials. The selection of particle size is also used to control the porosity of the coating to within the range of about 10 to about 50% by volume.

An adequate structural strength is required for the composite of substrate and coating, so that any fracture of the joint of the bracket to the tooth occurs in the resin and not in the coating. To achieve this condition, the tensile stength of the coating, the interface between the coating and the substrate and the substrate itself preferably is at least 8 MPa.

One embodiment of the invention comprises an orthodontic bracket constructed of stainless steel or other suitable metal or alloy, and which has the tooth engaging surface of the base provided with a porous coating. The bracket base may vary in size from about 3 mm in diameter to an area of about 4 x 8 mm, according to the type of attachment required.

If desired, a continuous strip of stainless steel or other alloy of about 5 to 10 mm wide may be coated with particles. Such strip then may be used to construct the base bonding surface of the orthodontic brackets or other attachments, or may be used to form orthodontic bands. When the invention takes the form of orthodontic bands, these may be preformed and then coated on the interior with the particles to provide the bonding surface.

As mentioned above, when the tooth-engaging surface and coating are metal, the coating may be formed by sintering or by fusion. When particles of other materials, such as, ceramics or polymers, are applied to metallic substrates or substrates of other materials, such as, ceramic or polymer, then any convenient technique known in the coating art may be used to produce the coated substrate, such as, by sintering or by adhesion.

This invention is illustrated by the following Examples:

## Example 1

Commercial stainless steel orthodontic bracket bases were coated with a slurry of stainless steel beads having diameters in the range of 44 to 180 micrometers and the coated bases were sintered in a vacuum furnace at a temperature of about 1400°C. A porous coated base resulted in which the porous coating had a thickness of 0.5 mm and a porosity of about 40% by volume.

When the bases were bonded to acid etched surfaces of human teeth using Orthomite 11 bracket bonding resin (Rocky Mountain Dental Products, Denver, Colorado), the tensile strength of the resulting joint was found to be 11.9 MPa compared with 7 MPa for brackets having a perforated base.

## Example 2

A series of commercial stainless steel orthodontic bracket bases was modified by powder coating with cobalt-chromium alloy beads of less than 200 micrometers (−100 mesh) in diameter to produce coatings of 0.5 to 0.7 mm thickness. After bonding to bovine teeth, the tensile strength was determined in each case. The results are set forth in the following Table I and are compared with those from a conventional mesh base bracket bonded under the same conditions:

TABLE I

| Sample | Average Tensile Bond Strength MPa (Kg/cm$^2$) |
|---|---|
| Mesh Base | 6.65 (66.5) |
| 50 to 100 micrometers (−100 +325 mesh) beads | 15.48 (154.8) |
| Less than 20 micrometers (−325 mesh) beads | 12.58 (125.8) |

3

# 0 099 741

## Example 3

A glass ceramic powder with an average particle size of 40 micrometers was chemically bonded to a commercial stainless steel orthodontic bracket base. The brackets were bonded to acid etched bovine enamel using Solotack orthodontic bonding resin (L. D. Caulk Co, Milford, Delaware). The average tensile bond strength after 24 hours conditioning in water at 37°C was found to be 5.9 MPa (59 kg/cm²).

In summary of this disclosure, the present invention provides novel orthodontic and other dental attachments which can achieve superior bonding to teeth as compared with the prior art. Modifications are possible within the scope of this invention as defined in the following claims.

## Claims

1. A dental attachment having a tooth engaging surface suitable for adhesive bonding of the attachment to teeth, characterized by an adherent coating of particulate material on the tooth engaging surface providing a porous interface into which a bonding resin in a fluid uncured state may readily flow and penetrate.

2. A dental attachment as claimed in Claim 1, wherein the particulate material is in the form of discrete particles which are spaced apart from each other on the surface.

3. A dental attachment as claimed in Claim 2, wherein the discrete particles are 20 to 100 micrometers in diameter and the spacing between them is 20 of 300 micrometers.

4. A dental attachment as claimed in Claim 1, wherein the particulate coating is in the form of a layer or multiple layers of particles bonded together to produce a network of interconnected pores.

5. A dental attachment as claimed in Claim 4, wherein the particles bonded together to form the network have a diameter less than 200 micrometers.

6. A dental attachment as claimed in Claim 4, wherein the particles bonded together to form the network are a mixture of particles of varying particle size restricted to a size range selected from 50 to 200 micrometers, 20 to 50 micrometers and less than 20 micrometers.

7. A dental attachment as claimed in any one of the preceding claims, wherein the tooth engaging surface is constructed of metal and the particulate material is constructed of metal.

8. A dental attachment as claimed in Claim 7, wherein the attachment has a stainless steel substrate and the particulate material also is stainless steel.

9. A dental attachment as claimed in Claim 7 or Claim 8 in the form of an orthodontic bracket, wherein the particulate coating consists of metal spheres having a diameter of less than 200 micrometers and joined to each other and to the tooth engaging surface at their points of contact therewith, has a thickness of 50 to 300 micrometers, and a porosity of 10 to 50% by volume, and the interface between the porous coating and the tooth engaging surface has a tensile bond strength of at least 8 MPa.

10. A dental attachment as claimed in any one of Claims 1 to 3, wherein the tooth engaging surface is constructed of metal and the particulate material is constructed of ceramic material.

11. A dental attachment as claimed in any one of Claims 1 to 8 and 10, wherein the particulate material coating has a thickness of less than 500 micrometers, a porosity of 10 to 50% by volume and a tensile bond strength of at least 8 MPa.

## Patentansprüche

1. Dentales Haltemittel mit einer Zahneingriffsfläche, die für eine Klebverbindung des Haltesmittels mit Zähnen geeignet ist, gekennzeichnet durch einen anhaftenden Überzug aus einem Partikelmaterial auf der Zahneingriffsfläche, der für eine poröse Grenzfläche sorgt, in die ein Bindeharz in fluidem, nicht ausgehärtetem Zustand leicht einströmen und eindringen kann.

2. Dentales Haltemittel nach Anspruch 1, wobei das Partikelmaterial in der Form von diskreten Teilchen vorliegt, die auf der Oberfläche in gegenseitigem Abstand voneinander angeordnet sind.

3. Dentales Haltemittel nach Anspruch 2, wobei die diskreten Teilchen einen Durchmesser von 20 bis 100 Mikrometer haben und der Abstand zwischen den Teilchen 20 bis 300 Mikrometer beträgt.

4. Dentales Haltemittel nach Anspruch 1, wobei der Partikelüberzug die Form einer Schicht oder von mehreren Schichten aus Teilchen hat, die unter Bildung eines Netzwerks von untereinander in Verbindung stehenden Poren miteinander verbunden sind.

5. Dentales Haltemittel nach Anspruch 4, wobei die unter Bildung des Netzwerkes miteinander verbundenen Teilchen einen Durchmesser von weniger als 200 Mikrometer haben.

6. Dentales Haltemittel nach Anspruch 4, wobei die unter Bildung des Netzwerkes miteinander verbundenen Teilchen ein Gemisch von Teilchen unterschiedlicher Teilchengröße sind, die auf einen Größenbereich von 50 bis 200 Mikrometer, 20 bis 50 Mikrometer und weniger als 20 Mikrometer beschränkt sind.

7. Dentales Haltemittel nach einem der vorhergehenden Ansprüche, wobei die Zahneingriffsfläche aus Metall aufgebaut ist und das Partikelmaterial aus Metall aufgebaut ist.

8. Dentales Haltemittel nach Anspruch 7, wobei das Haltemittel ein Substrat aus rostfreiem Stahl aufweist und das Partikelmaterial gleichfalls rostfreier Stahl ist.

4

**0 099 741**

9. Dentales Haltemittel nach Anspruch 7 oder Anspruch 8 in Form einer orthodontischen Klammer, wobei der Partikelüberzug aus untereinander und mit der Zahneingriffsfläche an ihren Kontaktstellen verbundenen Metallkügelchen mit einem Durchmesser von weniger als 200 Mikrometer besteht und eine Dicke von 50 bis 300 Mikrometer sowie eine Porosität von 10 bis 50 Volumenprozent hat, und wobei die Grenzfläche zwischen dem porösen Überzug und der Zahneingriffsfläche eine Zugbindefestigkeit von mindestens 8 MPa hat.

10. Dentales Haltemittel nach einem der Ansprüche 1 bis 3, wobei die Zahneingriffsfläche aus Metall aufgebaut ist und das Partikelmaterial aus keramischen Werkstoff besteht.

11. Dentales Haltemittel nach einem der Ansprüche 1 bis 8 und 10, wobei der Partikelmaterialüberzug eine Dicke von weniger als 500 Mikrometer, eine Porosität von 10 bis 50 Volumenprozent und eine Zugbindefestigkeit von mindestens 8 MPa hat.

## Revendications

1. Dispositif de fixation dentaire, comportant une surface de contact avec les dents qui se prête au collage du dispositif de fixation aux dents, caractérisé par un revêtement adhérent de matière particulaire sur la surface de contact avec les dents, créant une interface poreuse dans laquelle une résine d'union à l'état fluide non durci peut facilement couler et pénétrer.

2. Dispositif de fixation dentaire selon la revendication 1, dans lequel la matière particulaire est sous la forme de particules discrètes qui sont espacées mutuellement sur la surface.

3. Dispositif de fixation dentaire selon la revendication 2, dans lequel les particules discrètes ont un diamètre de 20 à 100 µm et leur espacement mutuel est compris entre 20 et 300 µm.

4. Dispositif de fixation dentaire selon la revendication 1, dans lequel le revêtement particulaire est sous la forme d'une couche ou de couches multiples de particules unies entre elles de manière à former un réseau de pores interconnectés.

5. Dispositif de fixation dentaire selon la revendication 4, dans lequel les particules unies entre elles pour former le réseau ont un diamètre inférieur à 200 µm.

6. Dispositif de fixation dentaire selon la revendication 4, dans lequel les particules unies entre elles pour former le réseau constituent un mélange de particules de granulométrie variable, limitée à une plage granulométrique choisie entre 50—200 µm, 20—50 µm et moins de 50 µm.

7. Dispositif de fixation dentaire selon l'une quelconque des revendications 1 à 6, dans lequel la surface de contact avec les dents est faite de métal et la matière particulaire est faite de metal.

8. Dispositif de fixation dentaire selon la revendication 7, caractérisé en ce qu'il comporte un substrat en acier inoxydable et en ce que la matière particulaire est également l'acier inoxydable.

9. Dispositif de fixation dentaire selon la revendication 7 ou 8 sous la forme d'un crochet-support orthodontique, caractérisé en ce que le revêtement particulaire est constitué par des sphères de métal ayant un diamètre de moins de 200 µm, unies les unes aux autres et à la surface de contact avec les dents par leurs points de contact avec celle-ci, en ce qu'il a une épaisseur de 50 à 300 µm et une porosité de 10 à 50% en volume, et en ce que l'interface entre le revêtement poreux et la surface de contact avec les dents a une résistance de liaison à la traction d'au moins 8 MPa.

10. Dispositif de fixation dentaire selon l'une quelconque des revendications 1 à 3, dans lequel la surface de contact avec les dents est faite de métal et la matière particulaire est faite de matière céramique.

11. Dispositif de fixation dentaire selon l'une quelconque des revendications 1 à 8 et 10, dans lequel le revêtement de matière particulaire a une épaisseur de moins de 500 µm, une porosité de 10 à 50% en volume et une résistance de liaison à la traction d'au moins 8 MPa.

5